# EUROPÄISCHE PATENTSCHRIFT

(11) **EP 1 630 377 B1**
(45) Veröffentlichungstag und Bekanntmachung des Hinweises auf die Patenterteilung: **27.04.2011**
(21) Anmeldenummer: 04104139.3
(22) Anmeldetag: 30.08.2004
(51) Int. Cl.: F01P 11/02, B62D 5/06

(54) **System mit Kühlmittelbehälter und Hydraulikölbehälter**
System with coolant container and hydraulic fluid container
Système avec un réservoir pour liquide de refroidissement et un réservoir pour de l'huile hydraulique

(43) Veröffentlichungstag der Anmeldung: 01.03.2006
(73) Patentinhaber: Ford Global Technologies, LLC, A subsidary of Ford Motor Company, Dearborn, MI 48126 (US)
(72) Erfinder: Figura, Michael Georg, 41542, Dormagen (DE); Kalies, Klaus, 41539, Dormagen (DE)
(74) Vertreter: Drömer, Hans-Carsten

(56) Entgegenhaltungen:
- EP-A- 0 771 704
- EP-A- 1 219 526
- DE-A- 10 119 704
- DE-U- 20 023 339
- GB-A- 2 016 393
- US-A- 5 680 833
- US-A- 5 971 062

## Beschreibung

Die Erfindung betrifft ein System umfassend einen Kühlmittelbehälter einer Flüssigkeitsumlaufkühlung und einen Hydraulikölbehälter einer hydraulischen Servolenkung, insbesondere für die Verwendung in einer Brennkraftmaschine.

Des Weiteren betrifft die Erfindung ein Verfahren zur Beeinflussung der Temperatur eines Hydrauliköls einer hydraulischen Servolenkung.

Ein System der oben genannten Art wird beispielsweise in einem Kraftfahrzeug verwendet. Flüssigkeitgekühlte Brennkraftmaschinen verfügen dabei in der Regel über eine Flüssigkeitsumlaufkühlung, bei der ein Kühlmittel-Wasser-Gemisch - im folgenden verkürzt als Kühlmittel bezeichnet - mittels einer Pumpe in einem geschlossenen Kreislauf zwangsgefördert wird. Die Flüssigkeitsumlaufkühlung umfaßt Kühlkanäle im Zylinderkopf und im Zylinderblock der Brennkraftmaschine und in der Regel einen Wärmetauscher, in dem ein Wärmeübergang vom Kühlmittel an die den Wärmtauscher durchströmende Luft herbeigeführt wird. Dabei ist der Wärmetauscher häufig in einer Bypaßleitung der Flüssigkeitsumlaufkühlung angeordnet, die thermostatgesteuert geöffnet bzw. geschlossen wird.

Eine hydraulische Servolenkung als zweite Komponente des Systems wird in Kraftfahrzeugen eingesetzt, um den Lenkvorgang zu unterstützen bzw. zu erleichtern. Hierzu wird - ebenfalls in einem geschlossenen Kreislauf - ein mittels einer Pumpe unter Druck gesetztes Hydrauliköl bereitgestellt, das zur Erzeugung bzw. der Verstärkung der Lenkkraft dient.

Abgesehen von diesen beiden genannten Fluidkreisläufen verfügt eine Brennkraftmaschine bzw. ein Kraftfahrzeug in der Regel über eine Vielzahl von Vorrichtungen, bei denen ein Fluid verwendet und/oder mittels einer Pumpe gefördert bzw. unter Druck gesetzt wird. Beispiele für derartige Vorrichtungen sind unter anderem der Bremskraftverstärker und die Klimaanlage, aber auch die Kraftstoffversorgungseinrichtung.

In der Vergangenheit wurden bereits mehrfach Versuche unternommen, die verschiedenen Fluidkreisläufe zu kombinieren, um vorteilhafte Synergieeffekte zu erzielen. Im Mittelpunkt der Bemühungen steht dabei häufig eine Reduzierung der Herstellungskosten, insbesondere durch eine Verringerung der Bauteilanzahl, wobei die Anzahl der Bauteile dadurch gesenkt werden kann, daß einem bereits vorhandenen Bauteil eine Doppelfunktion zugewiesen wird. So offenbaren die Druckschriften DE 2002 3339 U1 und US 5 971 062 Bauteile mit einer Doppelfunktion.

Die DE 44 44 201 A1 beschreibt beispielsweise ein System, bei dem in einer Brennkraftmaschine eine Flüssigkeitsumlaufkühlung mit einer hydraulischen Servolenkung in der Art kombiniert wird, daß lediglich ein Fluid und lediglich eine Pumpe zur Förderung dieses Fluids erforderlich sind. Dabei werden die Flüssigkeitsumlaufkühlung und die hydraulische Servolenkung in der Weise zusammengefaßt, daß Kühlung und Servolenkung mittels einer gemeinsamen Pumpe aus einem gemeinsamen Reservoir mit einem Kühlmittel-Wasser-Gemisch druckgespeist sind.

Bei dem vorgeschlagenen Konzept entfällt eine Pumpe und mit dieser Pumpe auch die üblicherweise erforderliche Antriebseinheit für diese Pumpe, wodurch die Herstellungskosten gesenkt werden können. Darüber hinaus führt die Abnahme der Anzahl an Bauteilen auch zu einer Reduzierung der Montagekosten. Eine geringere Anzahl an Bauteilen führt aber nicht nur zu niedrigeren Montagekosten, sondern auch zu geringeren Bereitstellungs- und Verwaltungskosten.

Mit der Verringerung der Anzahl der Bauteile nimmt auch das Gesamtgewicht der Konstruktion ab, wobei man im Hinblick auf einen geringen Kraftstoffverbrauch immer bemüht ist, eine Bauteilvariante von möglichst geringem Gewicht zu konzipieren. Eine weitere Kraftstoffeinsparung ergibt sich bei dem in der DE 44 44 201 A1 beschriebenen System insbesondere dadurch, daß die üblicherweise für den Antrieb einer zweiten Pumpe erforderliche Energie eingespart wird.

Des Weiteren ist es grundsätzlich ein Ziel der Konstrukteure, im Motorraum des Kraftfahrzeuges ein möglichst effektives d. h. dichtes Packaging der gesamten Antriebseinheit zu realisieren, was ebenfalls durch eine Verringerung der Bauteilanzahl unterstützt wird. Berücksichtigt werden muß dabei insbesondere, daß ein dichtes Packaging nicht nur durch den Wegfall einzelner Bauteile und des damit eingesparten Bauraums realisiert wird, sondern auch durch den Wegfall von notwendigen Befestigungsmitteln und Anlenkpunkten.

Vor diesem Hintergrund ist es die Aufgabe der vorliegenden Erfindung, ein System mit einem Kühlmittelbehälter einer Flüssigkeitsumlaufkühlung und einem Hydraulikölbehälter einer hydraulischen Servolenkung bereitzustellen, mit dem die oben genannten Ziele unterstützt werden und das insbesondere ein möglichst dichtes Packaging der gesamten Antriebseinheit zuläßt.

Eine weitere Teilaufgabe der vorliegenden Erfindung ist es, ein Verfahren zur Beeinflussung der Temperatur eines Hydrauliköls einer hydraulischen Servolenkung aufzuzeigen.

Gelöst wird die erste Teilaufgabe durch ein System umfassend einen Kühlmittelbehälter einer Flüssigkeitsumlaufkühlung und einen Hydraulikölbehälter einer hydraulischen Servolenkung, insbesondere für die Verwendung in einer Brennkraftmaschine, wobei der Kühlmittelbehälter mit dem Hydraulikölbehälter einteilig ausgebildet ist, so daß das System ein monolithisches Bauteil bildet, oder das System mit Kühlmittelbehälter und Hydraulikölbehälter aus mindestens zwei Bauteilen aufgebaut ist, wobei die Bauteile stoffschlüssig und/oder formschlüssig miteinander verbunden sind und der Kühlmittelbehälter und der Hydraulikölbehälter mindestens eine gemeinsame Begrenzungswand aufweisen in der Art, dass sich auf der einen Seite der Begrenzungswand Kühlmittel befindet und sich auf der anderen Seite der Begrenzungswand Hydrauliköl befindet.

Die beiden vorgeschlagenen Alternativen zeichnen sich dadurch aus, daß eine unlösbare Verbindung zwischen dem Kühlmittelbehälter und dem Hydraulikölbehälter vorgesehen ist. Diese unlösbare Verbindung wird entweder dadurch realisiert, daß beide Behälter aus einem Stück als monolithisches Bauteil gefertigt werden oder alternativ dadurch, daß gezielt eine unlösbare Verbindung in die mindestens zwei das System ausbildenden Bauteile durch Stoffschluß oder Formschluß eingebracht wird. Dieses gemeinsame Lösungsprinzip unterscheidet das erfindungsgemäße System mit Kühlmittelbehälter und Hydraulikölbehälter von den herkömmlichen Systemen, bei denen ein separater Kühlmittelbehälter und ein separater Hydraulikölbehälter vorliegen, die dazu noch räumlich weit voneinander beabstandet angeordnet sind.

Mit dem erfindungsgemäßen System kann die Anzahl der Bauteile verringert werden, wobei zwei einzelne Bauteile, nämlich der Kühlmittelbehälter und der Hydraulikölbehälter, zu einem Bauteil zusammengefaßt werden. Dadurch, daß bei dem erfindungsgemäßen System die Anzahl der Bauteile reduziert wird, können die Herstellungskosten und Montagekosten verringert werden.

Des weiteren weist das vorgeschlagene System prinzipbedingt ein geringeres Gewicht und einen kleineren Raumbedarf auf, da das erfindungsgemäße System kompakter als herkömmliche Systeme ausgeführt ist. Es werden weniger Lager bzw. Anlenkpunkte und weniger Befestigungsmittel benötigt. Dadurch gestattet das erfindungsgemäße System ein möglichst dichtes Packaging der gesamten Antriebseinheit.

Ist das System aus mehreren Bauteilen aufgebaut, handelt es sich gewissermaßen um eine vormontierte Baugruppe, die die Anzahl der Montageschritte an der Fertigungsstraße des Kraftfahrzeuges reduzieren hilft.

Somit wird durch das erfindungsgemäße System die erste der Erfindung zugrunde liegende Aufgabe gelöst, nämlich ein System bereitzustellen, mit dem die in der Einleitung genannten Ziele unterstützt werden und das insbesondere einen geringen Raumbedarf aufweist.

Weitere vorteilhafte Ausführungsformen des Systems werden im Zusammenhang mit den Unteransprüchen erörtert.

Vorteilhaft sind Ausführungsformen des Systems, bei denen die mindestens zwei Bauteile zur Ausbildung einer stoffschlüssigen Verbindung miteinander verklebt sind.

Das Einbringen einer Klebeverbindung erfolgt in der Regel ohne Zuhilfenahme von Werkzeugen durch direktes Auftragen eines Klebstoffes und bietet somit unter fertigungstechnischen Gesichtspunkten Vorteile, da der Fertigungsprozeß kostenextensiv ist. Darüber hinaus dient der Klebstoff gleichzeitig als Dichtungsmaterial in der Verbindungsstelle der mindestens zwei Bauteile, wodurch bei dem hier in Rede stehenden System insbesondere die Dichtheit der beiden Behälter sichergestellt wird.

Vorteilhaft sind auch Ausführungsformen des Systems, bei denen die mindestens zwei Bauteile zur Ausbildung einer stoffschlüssigen Verbindung miteinander verschweißt sind. Verschweißen bedeutet im Rahmen der vorliegenden Erfindung sowohl das Verschweißen von Metallen als auch das Verschweißen von Kunststoffen. Eine Schweißverbindung zeichnet sich durch eine hohe Belastbarkeit aus.

Vorteilhaft sind Ausführungsformen des Systems, bei denen die mindestens zwei Bauteile zusätzlich kraftschlüssig miteinander verbunden sind. Eine zusätzliche kraftschlüssige Verbindung der Bauteile kann beispielsweise durch Schrauben oder Spannelemente eingebracht werden.

Vorteilhaft sind Ausführungsformen des Systems, bei denen das System aus zwei Bauteilen aufgebaut ist, wobei ein wannenförmiges Unterteil das erste Bauteil und ein deckelförmiges Oberteil das zweite Bauteil bildet. Diese Aufteilung des Systems in zwei Bauteile bietet unter fertigungstechnischen Gesichtspunkten Vorteile. Komplizierte Formen, insbesondere mit Hinterschneidungen, werden vermieden, so daß die beiden Bauteile üblichen Fertigungsverfahren zugänglich gemacht werden und beispielsweise im Spritzgußverfahren gefertigt werden können. Das Oberteil kann auch modular ausgebildet sein d.h. selbst mehrere Bauteile umfassen.

Vorteilhaft sind Ausführungsformen des Systems, bei denen die Verbindung der mindestens zwei Bauteile in Bereichen des Systems vorgesehen ist, die weder vom Kühlmittel noch vom Hydrauliköl dauerhaft beaufschlagt sind. Zwar wird darauf geachtet, daß die Verbindungsstellen dicht ausgeführt sind, um sowohl ein Austreten der im System befindlichen Flüssigkeiten in die Umgebung als auch eine Vermischung der beiden Flüssigkeiten untereinander zu verhindern. Vorteilhaft ist es aber zudem, wenn die Ausbildung des Systems gezielt in der Weise erfolgt, daß die Verbindungsstellen nicht mit dem im Kühlmittelbehälter bevorrateten Kühlmittel und nicht mit dem im Hydraulikölbehälter befindlichen Hydrauliköl in Kontakt kommen. Zum einen könnten nämlich die Flüssigkeiten die Verbindung angreifen und schädigen bzw. zerstören. Zum anderen bietet diese Vorgehensweise aber auch Vorteile für den Fall, daß die Verbindung nicht absolut dicht ist. Dann treten nämlich keine Flüssigkeiten aus, sondern im System befindliche Gase. Ein Flüssigkeitsverlust, der nachteilige Auswirkungen auf die Flüssigkeitsumlaufkühlung bzw. die hydraulische Servolenkung hätte, ist nicht zu befürchten.

Vorteilhaft sind Ausführungsformen des Systems, bei denen das System im wesentlichen aus Kunststoff aufgebaut ist, wobei der Kunststoff vorzugsweise Polypropylen ist. Nach dem Stand der Technik wird der Kühlmittelbehälter in der Regel aus Polypropylen und der Hydraulikölbehälter aus Polyamid hergestellt. Eine Herstellung des Hydraulikölbehälter aus dem preiswerteren Polypropylen ist nicht möglich, da dieser Kunststoff nicht über die erforderliche Temperaturbeständigkeit verfügt, die aber aufgrund des bis zu 130°C heißen Hydrauliköls erforderlich ist.

Bei dem erfindungsgemäßen System, bei dem beide Behälter in einer Baugruppe vereint werden, findet aber ein Wärmeübergang statt, der - zumindest im normalen Dauerbetrieb der Brennkraftmaschine - dafür sorgt, daß die Temperatur des Hydrauliköls vergleichsweise niedrig ist, so daß auch der Hydraulikölbehälter aus Polypropylen gefertigt werden kann. Damit können beide Behälter des Systems aus demselben preiswerteren Kunststoff gefertigt werden.

Dabei soll das System im wesentlichen aus Kunststoff aufgebaut sein. Die Formulierung soll zum Ausdruck bringen, daß das System auch vollständig aus Kunststoff gefertigt sein kann, aber nicht zwingend vollständig aus Kunststoff gefertigt sein muß. Einzelne Elemente des Systems können also durchaus aus anderen Materialien hergestellt werden. In diesem Zusammenhang bedeutet im wesentlichen, daß mehr als 70% - in Massenprozent - des Systems aus Kunststoff gefertigt sind.

Vorteilhaft sind Ausführungsformen des Systems, bei denen der Kühlmittelbehälter und der Hydraulikölbehälter mindestens eine gemeinsame Begrenzungswand aufweisen. Die gemeinsame Begrenzungswand ist dadurch gekennzeichnet, daß sie gleichzeitig den Kühlmittelbehälter und den Hydraulikölbehälter begrenzt. Auf der einen Seite der Begrenzungswand befindet sich Kühlmittel, wohingegen auf der anderen Seite der Begrenzungswand Hydrauliköl vorliegt.

Diese Ausgestaltung des erfindungsgemäßen Systems sorgt für einen verstärkten Wärmeübergang zwischen dem Kühlmittel und dem Hydrauliköl, wobei der Wärmeübergang in beide Richtungen erfolgen kann. So kann nach einem Kaltstart das sich langsam erwärmende Kühlmittel dazu verwendet werden, das Hydrauliköl zu erwärmen. Im Dauerbetrieb nach der Warmlaufphase kann hingegen das Kühlmittel dazu genutzt werden, das Hydrauliköl zu kühlen.

Vorteilhaft sind dabei Ausführungsformen des Systems, bei denen die mindestens eine gemeinsame Begrenzungswand Elemente aufweist, die aus einem Material gefertigt sind, das eine höhere spezifische Wärmekapazität aufweist als das Begrenzungswandmaterial. Die Integration von Elementen höherer Wärmekapazität in die Begrenzungswand unterstützt und fördert den Wärmeübergang.

Vorteilhaft sind Ausführungsformen des Systems, bei denen die Elemente sich von der dem Kühlmittelbehälter zugewandten Außenfläche der Begrenzungswand bis zu der dem Hydraulikölbehälter zugewandten Außenfläche der Begrenzungswand erstrecken. Bei dieser Ausführungsform dienen die Elemente als Wärmebrücken, die für einen direkten Wärmeübergang zwischen den Flüssigkeiten sorgen.

Vorteilhaft sind Ausführungsformen des Systems, bei denen der Hydraulikölbehälter eine rohrförmige Grundform aufweist und vom Kühlmittelbehälter in der Art umgeben ist, daß die Mantelfläche des Hydraulikölbehälters die mindestens eine gemeinsame Begrenzungswand bildet. Bei dieser Ausführungsform ist der Hydraulikölbehälter vom Kühlmittelbehälter umgeben. Dies sorgt für eine großflächige Begrenzungswand, was den Wärmeübergang zwischen den Flüssigkeiten unterstützt bzw. vergrößert.

Vorteilhaft sind Ausführungsformen des Systems, bei denen der Kühlmittelbehälter und/oder der Hydraulikölbehälter am oberen Ende eine Einfüllöffnung aufweist. Diese Öffnung dient zum Nachfüllen von Kühlmittel bzw. Hydrauliköl. Des weiteren kann über die Einfüllöffnung der Flüssigkeitsspiegel im Behälter kontrolliert bzw. überwacht werden.

Vorteilhaft sind Ausführungsformen des Systems, bei denen der Kühlmittelbehälter und/oder der Hydraulikölbehälter im Innern mit einer Leiteinrichtung ausgestattet ist, die eine durch den Behälter geführte Fluidströmung lenkt. In den Kühlmittelbehälter wird Kühlmittel eingeleitet und wieder entnommen. Ebenso wird in den Hydraulikölbehälter Hydrauliköl eingeleitet und wieder entnommen. Im Hinblick auf einen optimierten Wärmübergang ist es vorteilhaft, die Strömung gezielt durch die Behälter zu leiten, was mittels der vorgeschlagenen Leiteinrichtung erfolgen kann.

Vorteilhaft sind in diesem Zusammenhang ebenfalls Ausführungsformen des Systems, bei denen im Kühlmittelbehälter und/oder im Hydraulikölbehälter eine Prallplatte vorgesehen ist, um die eintretende Fluidströmung zu beruhigen.

Vorteilhaft sind auch Ausführungsformen des Systems, bei denen im Kühlmittelbehälter und/oder im Hydraulikölbehälter ein Filter vorgesehen ist, um eine durch den Behälter geführte Fluidströmung zu reinigen. Wird der Filter in der Art angeordnet, daß die eintretende Fluidströmung den Filter passieren muß, dient dieser Filter gleichzeitig zur Beruhigung der Strömung und übernimmt damit zusätzlich die Funktion einer Prallplatte.

Bei monolithisch ausgebildeten Systemen sind Ausführungsformen des Systems vorteilhaft, bei denen das System entweder einteilig als gegossenes Bauteil oder einteilig als warmgeformtes Bauteil ausgebildet ist.

Monolithisch ausgebildete Systeme haben den Vorteil, daß keine Bauteile zu verbinden sind und daher prinzipbedingt keine Verbindungsstellen vorliegen. Die Dichtheit des Systems ist daher in jedem Fall gewährleistet.

Die zweite der Erfindung zugrunde liegende Teilaufgabe wird gelöst durch ein Verfahren zur Beeinflussung der Temperatur eines Hydrauliköls einer hydraulischen Servolenkung, das dadurch gekennzeichnet ist, daß ein das Hydrauliköl bevorratender Hydraulikölbehälter in der Art ausgebildet wird, daß der Hydraulikölbehälter mit einem Kühlmittelbehälter einer Flüssigkeitsumlaufkühlung einer Brennkraftmaschine mindestens eine gemeinsame Begrenzungswand aufweist.

Das im Zusammenhang mit dem erfindungsgemäßen System Gesagte gilt ebenfalls für das erfindungsgemäße Verfahren. Dadurch, daß der Kühlmittelbehälter und der Hydraulikölbehälter in einem System zusammengefaßt bzw. integriert werden, ergibt sich die Möglichkeit, die Temperatur des Hydrauliköls mittels der Umlaufkühlung zu beeinflussen.

Restriktionen, die sich nach dem Stand der Technik bei der Auswahl des Behältermaterials infolge der zu hohen Temperaturen des Hydrauliköls ergeben, entfallen. Das Kühlmittel bzw. die Flüssigkeitsumlaufkühlung wird zur Konditionierung des Hydrauliköls verwendet.

Vorteilhaft sind in diesem Zusammenhang Ausführungsformen des Verfahrens, bei denen im Betrieb der Brennkraftmaschine das Hydrauliköl mittels der im Kühlmittelbehälter befindlichen Kühlflüssigkeit gekühlt wird. Bei dieser Verfahrensvariante findet ein Wärmeübergang vom Hydrauliköl zum Kühlmittel statt. Dem Kühlmittel wird diese Wärme dann wiederum an anderer Stelle entzogen, beispielsweise in einem in der Flüssigkeitsumlaufkühlung vorgesehenen Wärmetauscher.

Vorteilhaft sind auch Ausführungsformen des Verfahrens, bei denen in der Warmlaufphase der Brennkraftmaschine das Hydrauliköl mittels der im Kühlmittelbehälter befindlichen Kühlflüssigkeit erwärmt wird. Nach einem Kaltstart der Brennkraftmaschine sind in der Regel weder das Kühlmittel noch das Hydrauliköl auf Betriebstemperatur. Eine schnelle Erwärmung des Kühlmittels wird nach dem Stand der Technik häufig dadurch erzielt, daß ein in einer Bypaßleitung vorgesehener Wärmetauscher in der Warmlaufphase vom Kühlmittel nicht durchströmt wird, so daß dem Kühlmittel keine zusätzliche Wärme im Wärmetauscher entzogen wird. Das sich dadurch schneller erwärmende Kühlmittel wiederum wird bei dem erfindungsgemäßen Verfahren dazu genutzt, das Hydrauliköl in möglichst kurzer Zeit auf Betriebstemperatur zu bringen.

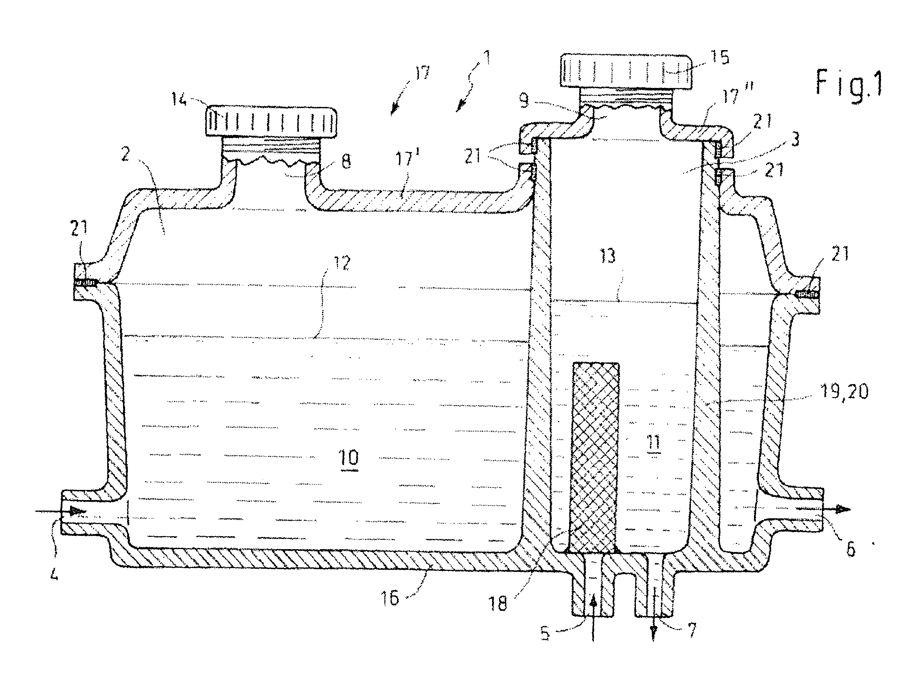

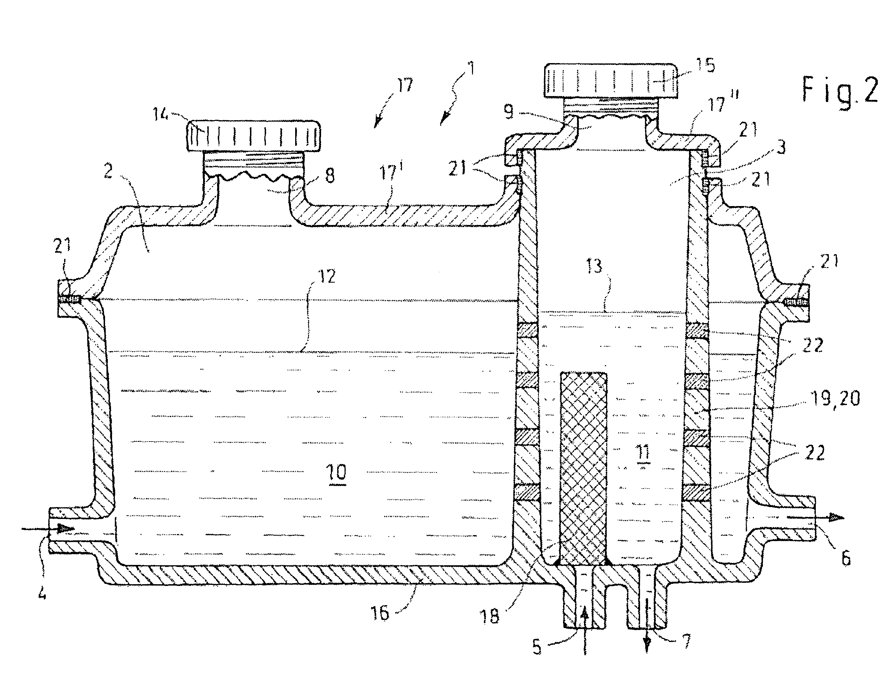

Im folgenden wird die Erfindung anhand von zwei Ausführungsbeispielen gemäß der Figuren 1 und 2 näher beschrieben. Hierbei zeigt:
- Fig. 1: schematisch eine erste Ausführungsform des Systems in einer Seitenansicht und teilweise geschnitten, und
- Fig. 2: schematisch eine zweite Ausführungsform des Systems in einer Seitenansicht und teilweise geschnitten.

Figur 1 zeigt eine erste Ausführungsform des Systems 1. Das System 1 umfaßt einen Kühlmittelbehälter 2 einer Flüssigkeitsumlaufkühlung und einen Hydraulikölbehälter 3 einer hydraulischen Servolenkung, wobei beide Behälter 2,3 jeweils über eine Eintrittsöffnung 4,5 und eine Austrittsöffnung 6,7 verfügen, über die die Flüssigkeiten, nämlich das Kühlmittel 10 einerseits und das Hydrauliköl 11 andererseits, in die Behälter 2,3 eintreten bzw. diese wieder verlassen. Im Bereich der Eintrittsöffnung 5 des Hydraulikölbehälters 3 ist ein Filter 18 zum Reinigen des eintretenden Hydrauliköls 11 angeordnet. Dieser Filter 18 dient gleichzeitig zur Beruhigung der eintretenden Strömung.

Sowohl der Kühlmittelbehälter 2 als auch der Hydraulikölbehälter 3 sind mit einer Einfüllöffnung 8,9 ausgestattet, die zum Nachfüllen von Kühlmittel 10 bzw. Hydrauliköl 11 dient und über die der Flüssigkeitsspiegel 12,13 im Behälter 2,3 kontrolliert bzw. überwacht werden kann. Die Einfüllöffnungen 8,9 sind jeweils mit einer Kappe 14,15 verschlossen.

Die in Figur 1 dargestellte Ausführungsform des Systems 1 ist nicht monolithisch ausgebildet, sondern umfaßt drei Bauteile 16,17',17", die stoffschlüssig miteinander verbunden sind. Das erste Bauteil 16 des Systems 1 wird durch ein wannenförmiges Unterteil 16 gebildet, in das sämtliche Eintrittsöffnungen 4,5 und Austrittsöffnungen 6,7 eingearbeitet sind. Dieses wannenförmige Unterteil 16 verfügt über ausreichend hohe Seitenwandungen, um das Kühlmittel 10 und das Hydrauliköl 11 vollständig aufzunehmen.

Der im Unterteil 16 vorgesehene Hydraulikölbehälter 3 weist eine rohrförmige bzw. zylinderförmige Grundform auf und wird vom Kühlmittelbehälter 2 in der Art umgeben, daß die Mantelfläche 19 des Hydraulikölbehälters 3 eine gemeinsame Begrenzungswand 20 bildet d.h. sowohl den Kühlmittelbehälter 2 als auch den Hydraulikölbehälter 3 begrenzt. Auf der einen Seite der Begrenzungswand 20 befindet sich Kühlmittel 10, wohingegen auf der anderen Seite der Begrenzungswand 20 Hydrauliköl 11 vorliegt. Die unmittelbare Nachbarschaft der beiden Flüssigkeiten 10,11 gestattet die Beeinflussung der Temperatur des Hydrauliköls 11 mit Hilfe der Flüssigkeitsumlaufkühlung bzw. mit Hilfe des Kühlmittels 10.

Der Wärmeübergang zwischen dem Kühlmittel 10 und dem Hydrauliköl 11 kann dabei - in Abhängigkeit des Betriebszustandes der Brennkraftmaschine - in beide Richtungen erfolgen. Nach einem Kaltstart der Brennkraftmaschine wird das sich langsam erwärmende Kühlmittel 10 dazu verwendet, das Hydrauliköl 11 ebenfalls zu erwärmen. Im Dauerbetrieb - nach der Warmlaufphase - kann hingegen das Kühlmittel 10 dazu genutzt werden, das Hydrauliköl 11 zu kühlen.

Verschlossen wird das wannenförmige Unterteil 16 mit einem zweiteiligen deckelförmigen Oberteil 17 wobei ein erstes Teilstück des deckelförmigen Oberteils 17' den Kühlmittelbehälter 2 und ein zweites Teilstück des deckelförmigen Oberteils 17" den Hydraulikbehälter 3 verschließt. Die beiden Teilstücke 17',17" umfassen die Einfüllöffnungen 8,9. Dabei durchstößt der in das wannenförmige Unterteil 16 integrierte Hydraulikölbehälter 3 das erste Teilstück des deckelförmigen Oberteils 17'. Dadurch wird eine gute Zugänglichkeit zu den Schweißnähten 21 gewährleistet. Des weiteren stellt diese konstruktive Ausgestaltung sicher, daß das Hydrauliköl 11 sich unter keinen Umständen mit dem Kühlmittel 10 vermischt und zwar auch dann nicht, wenn die Schweißnähte 21 Undichtigkeiten aufweisen und sich die beiden Flüssigkeiten 10,11 in den Behältern 2,3 stärker bewegen.

Die stoffschlüssigen Verbindungen 21 der drei Bauteile 16,17',17" des Systems 1 sind in Bereichen vorgesehen, die weder vom Kühlmittel 10 noch vom Hydrauliköl 11 dauerhaft beaufschlagt werden d.h. in Bereichen, die oberhalb der beiden Flüssigkeitsspiegel 12,13 liegen. Dadurch können auch bei undichten Verbindungsstellen 21 die im System 1 befindlichen Flüssigkeiten 10,11 weder in die Umgebung austreten noch sich untereinander vermischen. Auf die Weise können die Flüssigkeiten 10,11 die Verbindung 21 auch nicht angreifen bzw. zerstören.

Figur 2 zeigt schematisch eine zweite Ausführungsform des Systems 1 in einer Seitenansicht und teilweise geschnitten. Es sollen nur die Unterschiede zu der in Figur 1 dargestellten Ausführungsform erörtert werden, weshalb im übrigen bezug genommen wird auf Figur 1. Für dieselben Bauteile wurden dieselben Bezugszeichen verwendet.

Im Unterschied zu der in Figur 1 dargestellten Ausführungsform verfügt das in Figur 2 dargestellte System 1 in der gemeinsamen Begrenzungswand 20 über Elemente 22, die aus einem Material gefertigt sind, das eine höhere spezifische Wärmekapazität aufweist als das Material der Begrenzungswand 20. Auf diese Weise unterstützen die Elemente 22 den Wärmeübergang zwischen den beiden Flüssigkeiten 10,11.

Die Elemente 22 sind von ringförmiger Gestalt und erstrecken sich von der dem Kühlmittelbehälter 2 zugewandten Außenfläche der Begrenzungswand 20 bis zu der dem Hydraulikölbehälter 3 zugewandten Außenfläche der Begrenzungswand 20. Die Elemente 22 können aber grundsätzlich auch andere Formen aufweisen, beispielsweise eine stabförmige Form.

### Bezugszeichen

- 1: System
- 2: Kühlmittelbehälter
- 3: Hydraulikölbehälter
- 4: Eintrittsöffnung
- 5: Eintrittsöffnung
- 6: Austrittsöffnung
- 7: Austrittsöffnung
- 8: Einfüllöffnung
- 9: Einfüllöffnung
- 10: Kühlmittel
- 11: Hydrauliköl
- 12: Kühlmittelspiegel
- 13: Hydraulikölspiegel
- 14: Kappe
- 15: Kappe
- 16: wannenförmiges Unterteil
- 17: deckelförmiges Oberteil
- 17': erstes Teilstück des deckelförmigen Oberteils
- 17": zweites Teilstück des deckelförmigen Oberteils
- 18: Filter
- 19: Mantelfläche
- 20: Begrenzungswand
- 21: Verbindung
- 22: Elemente

## Patentansprüche

1. System (1) umfassend einen Kühlmittelbehälter (2) einer Flüssigkeitsumlaufkühlung und einen Hydraulikölbehälter (3) einer hydraulischen Servolenkung, insbesondere für die Verwendung in einer Brennkraftmaschine, wobei
■ der Kühlmittelbehälter (2) mit dem Hydraulikölbehälter (3) einteilig ausgebildet ist, so daß das System (1) ein monolithisches Bauteil bildet, oder
■ das System (1) mit Kühlmittelbehälter (2) und Hydraulikölbehälter (3) aus mindestens zwei Bauteilen (16,17',17") aufgebaut ist, wobei die Bauteile (16,17',17") stoffschlüssig und/oder formschlüssig miteinander verbunden sind,
**dadurch gekennzeichnet, dass** sowohl im dem Fall, in dem der Kühlmittelbehälter mit dem Hydraulikölbehälter einteilig ausgebildet ist, als auch im dem Fall, in dem der Kühlmittelbehälter mit dem Hydraulikölbehälter aus mindestens zwei Bauteilen aufgebaut ist,
■ der Kühlmittelbehälter (2) und der Hydraulikölbehälter (3) mindestens eine gemeinsame Begrenzungswand (20) aufweisen in der Art, dass sich auf der einen Seite der Begrenzungswand (20) Kühlmittel (10) befindet und sich auf der anderen Seite der Begrenzungswand (20) Hydrauliköl (11) befindet.

2. System (1) nach Anspruch 1,
**dadurch gekennzeichnet, daß**
die mindestens zwei Bauteile (16,17',17") zur Ausbildung einer stoffschlüssigen Verbindung (21) miteinander verklebt sind.

3. System (1) nach Anspruch 1,
**dadurch gekennzeichnet, daß**
die mindestens zwei Bauteile (16,17',17") zur Ausbildung einer stoffschlüssigen Verbindung (21) miteinander verschweißt sind.

4. System (1) nach einem der vorherigen Ansprüche,
**dadurch gekennzeichnet, daß**
die mindestens zwei Bauteile (16,17',17") zusätzlich kraftschlüssig miteinander verbunden sind.

5. System (1) nach einem der vorherigen Ansprüche,
**dadurch gekennzeichnet, daß**
das System (1) aus zwei Bauteilen (16,17) aufgebaut ist, wobei ein wannenförmiges Unterteil (16) das erste Bauteil und ein deckelförmiges Oberteil (17) das zweite Bauteil bildet.

6. System (1) nach Anspruch 1,
**dadurch gekennzeichnet, daß**
die Verbindung (21) der mindestens zwei Bauteile (16,17',17") in Bereichen des Systems (1) vorgesehen ist, die weder vom Kühlmittel (10) noch vom Hydrauliköl (11) dauerhaft beaufschlagt sind.

7. System (1) nach einem der vorherigen Ansprüche,
**dadurch gekennzeichnet, daß**
das System (1) im wesentlichen aus Kunststoff aufgebaut ist.

8. System (1) nach Anspruch 7,
**dadurch gekennzeichnet, daß**
der Kunststoff Polypropylen ist.

9. System (1) nach einem der vorherigen Ansprüche,
**dadurch gekennzeichnet, daß**
die mindestens eine gemeinsame Begrenzungswand (20) Elemente (22) aufweist, die aus einem Material gefertigt sind, das eine höhere spezifische Wärmekapazität aufweist als das Begrenzungswandmaterial.

10. System (1) nach Anspruch 9,
**dadurch gekennzeichnet, daß**
die Elemente (22) sich von der dem Kühlmittelbehälter (2) zugewandten Außenfläche der Begrenzungswand (20) bis zu der dem Hydraulikölbehälter (3) zugewandten Außenfläche der Begrenzungswand (20) erstrecken.

11. System (1) nach einem der vorherigen Ansprüche,
**dadurch gekennzeichnet, daß**
der Hydraulikölbehälter (3) eine rohrförmige Grundform aufweist und vom Kühlmittelbehälter (2) in der Art umgeben ist, daß die Mantelfläche des Hydraulikölbehälters (3) die mindestens eine gemeinsame Begrenzungswand (20) bildet.

12. System (1) nach einem der vorherigen Ansprüche,
**dadurch gekennzeichnet, daß**
der Kühlmittelbehälter (2) und/oder der Hydraulikölbehälter (3) am oberen Ende eine Einfüllöffnung (8,9) aufweist.

13. System (1) nach einem der vorherigen Ansprüche,
**dadurch gekennzeichnet, daß**
der Kühlmittelbehälter (2) und/oder der Hydraulikölbehälter (3) im Innern mit einer Leiteinrichtung ausgestattet ist, die eine durch den Behälter (2,3) geführte Fluidströmung lenkt.

14. System (1) nach einem der vorherigen Ansprüche,
**dadurch gekennzeichnet, daß**
im Kühlmittelbehälter (2) und/oder im Hydraulikölbehälter (3) eine Prallplatte vorgesehen ist, um eine eintretende Fluidströmung zu beruhigen.

15. System (1) nach einem der vorherigen Ansprüche,
**dadurch gekennzeichnet, daß**
im Kühlmittelbehälter (2) und/oder im Hydraulikölbehälter (3) ein Filter (18) vorgesehen ist, um eine durch den Behälter (2,3) geführte Fluidströmung zu reinigen.

16. Monolithisch ausgebildetes System (1) nach Anspruch 1,
**dadurch gekennzeichnet, daß**
das System (1) einteilig als gegossenes Bauteil ausgebindet ist.

17. Monolithisch ausgebildetes System (1) nach Anspruch 1,
**dadurch gekennzeichnet, daß**
das System (1) einteilig als warmgeformtes Bauteil ausgebildet ist.

18. Verfahren zur Beeinflussung der Temperatur eines Hydrauliköls (11) einer
hydraulischen Servolenkung,
**dadurch gekennzeichnet, daß**
ein das Hydrauliköl (11) bevorratender Hydraulikölbehälter (3) in der Art ausgebildet wird, daß der Hydraulikölbehälter (3) mit einem Kühlmittelbehälter (2) einer Flüssigkeitsumlaufkühlung einer Brennkraftmaschine mindestens eine gemeinsame Begrenzungswand (20) aufweist in der Art, dass sich auf der einen Seite der Begrenzungswand (20) Kühlmittel (10) befindet und sich auf der anderen Seite der Begrenzungswand (20) Hydrauliköl (11) befindet.

19. Verfahren zur Beeinflussung der Temperatur eines Hydrauliköls (11) nach
Anspruch 18,
**dadurch gekennzeichnet, daß**
im Betrieb der Brennkraftmaschine das Hydrauliköl (11) mittels der im Kühlmittelbehälter (2) befindlichen Kühlflüssigkeit (10) gekühlt wird.

20. Verfahren zur Beeinflussung der Temperatur eines Hydrauliköls (11) nach
Anspruch 18 oder 19,
**dadurch gekennzeichnet, daß**
in der Warmlaufphase der Brennkraftmaschine das Hydrauliköl (11) mittels der im Kühlmittelbehälter (2) befindlichen Kühlflüssigkeit (10) erwärmt wird.

## Claims

1. System (1) comprising a coolant container (2) of a liquid circulation cooling circuit and a hydraulic oil container (3) of a hydraulic power steering assembly, in particular for use in an internal combustion engine,
■ the coolant container (2) being designed in one piece with the hydraulic oil container (3), so that the system (1) forms a monolithic component, or
■ the system (1) with coolant container (2) and hydraulic oil container (3) being constructed from at least two components (16, 17', 17"), the components (16, 17', 17") being interconnected by a material connection and/or a positive connection,
**characterized in that**, both in the case, in which the coolant container is formed integrally with the hydraulic oil container, and in the case, in which the coolant container is constructed with the hydraulic oil container from at least two components,
■ the coolant container (2) and the hydraulic oil container (3) have at least one common delimiting wall (20) in such a way that coolant (10) is situated on one side of the delimiting wall (20) and hydraulic oil (11) is situated on the other side of the delimiting wall (20).

2. System (1) according to Claim 1, **characterized in that** the at least two components (16, 17', 17") are adhesively bonded to one another to form a material connection (21).

3. System (1) according to Claim 1, **characterized in that** the at least two components (16, 17', 17") are welded to one another to form a material connection (21).

4. System (1) according to one of the preceding claims, **characterized in that** the at least two components (16, 17', 17") are additionally non-positively interconnected.

5. System (1) according to one of the preceding claims, **characterized in that** the system (1) is constructed from two components (16, 17), a trough-shaped lower part (16) forming the first component and a lid-shaped upper part (17) forming the second component.

6. System (1) according to Claim 1, **characterized in that** the connection (21) of the at least two components (16, 17', 17") is provided in regions of the system (1) which are not acted on permanently by either the coolant (10) or the hydraulic oil (11).

7. System (1) according to one of the preceding claims, **characterized in that** the system (1) is constructed essentially from plastic.

8. System (1) according to Claim 7, **characterized in that** the plastic is polypropylene.

9. System (1) according to one of the preceding claims, **characterized in that** the at least one common delimiting wall (20) comprises elements (22) which are made of a material which has a higher specific heat capacity than the delimiting wall material.

10. System (1) according to Claim 9, **characterized in that** the elements (22) extend from that outer surface of the delimiting wall (20) facing the coolant container (2) to that outer surface of the delimiting wall (20) facing the hydraulic oil container (3).

11. System (1) according to one of the preceding claims, **characterized in that** the hydraulic oil container (3) has a tubular basic shape and is surrounded by the coolant container (2) in such a way that the lateral surface of the hydraulic oil container (3) forms the at least one common delimiting wall (20).

12. System (1) according to one of the preceding claims, **characterized in that** the coolant container (2) and/or the hydraulic oil container (3) comprises a filling opening (8, 9) at the upper end.

13. System (1) according to one of the preceding claims, **characterized in that** the coolant container (2) and/or the hydraulic oil container (3) is equipped with a guide device in its interior, which directs a fluid flow guided through the container (2, 3).

14. System (1) according to one of the preceding claims, **characterized in that** a baffle plate is provided in the coolant container (2) and/or in the hydraulic oil container (3) in order to calm an incoming fluid flow.

15. System (1) according to one of the preceding claims, **characterized in that** a filter (18) is provided in the coolant container (2) and/or in the hydraulic oil container (3) in order to clean a fluid flow guided through the container (2, 3).

16. A system (1) of monolithic design according to Claim 1, **characterized in that** the system (1) is designed in one piece as a cast component.

17. A system (1) of monolithic design according to Claim 1, **characterized in that** the system (1) is designed in one piece as a thermoformed component.

18. Method for influencing the temperature of a hydraulic oil (11) of a hydraulic power steering assembly, **characterized in that** a hydraulic oil container (3) storing the hydraulic oil (11) is designed in such a way that the hydraulic oil container (3) has at least one common delimiting wall (20) with a coolant container (2) of a liquid circulation cooling circuit of an internal combustion engine, in such a way that coolant (10) is situated on one side of the delimiting wall (20) and hydraulic oil (11) is situated on the other side of the delimiting wall (20).

19. Method for influencing the temperature of a hydraulic oil (11) according to Claim 18, **characterized in that** the hydraulic oil (11) is, during operation of the internal combustion engine, cooled by means of the cooling liquid (10) present in the coolant container (2).

20. Method for influencing the temperature of a hydraulic oil (11) according to Claim 18 or 19, **characterized in that** the hydraulic oil (11) is, in the warm-up period of the internal combustion engine, heated up by means of the cooling liquid (10) present in the coolant container (2).

## Revendications

1. Système (1) comprenant un réservoir de réfrigérant (2) d'un refroidissement par circulation de liquide et un réservoir d'huile hydraulique (3) d'une direction assistée hydraulique, notamment pour l'utilisation dans un moteur à combustion interne, dans lequel :
- le réservoir de réfrigérant (2) est réalisé d'une seule pièce avec le réservoir d'huile hydraulique (3), de sorte que le système (1) forme un composant monolithique ou
- le système (1) avec le réservoir de réfrigérant (2) et le réservoir d'huile hydraulique (3) est construit à partir d'au moins deux composants (16, 17', 17"), les composants (16, 17', 17") étant connectés les uns aux autres par engagement par liaison de matière et/ou par coopération de forme,
**caractérisé en ce que** dans le cas où le réservoir de réfrigérant est réalisé d'une seule pièce avec le réservoir d'huile hydraulique, ainsi que dans le cas où le réservoir de réfrigérant est construit avec le réservoir d'huile hydraulique à partir d'au moins deux composants,
- le réservoir de réfrigérant (2) et le réservoir d'huile hydraulique (3) présentent au moins une paroi de limitation commune (20) de telle sorte que du réfrigérant (10) se trouve d'un côté de la paroi de limitation (20) et que de l'huile hydraulique (11) se trouve de l'autre côté de la paroi de limitation (20).

2. Système (1) selon la revendication 1,
**caractérisé en ce que**
lesdits au moins deux composants (16, 17', 17") sont collés les uns aux autres pour former une connexion par engagement par liaison de matière (21).

3. Système (1) selon la revendication 1,
**caractérisé en ce que**
lesdits au moins deux composants (16, 17', 17") sont soudés les uns aux autres pour former une connexion par engagement par liaison de matière (21).

4. Système (1) selon l'une quelconque des revendications précédentes,
**caractérisé en ce que**
lesdits au moins deux composants (16, 17', 17") sont en outre connectés les uns aux autres par engagement par force.

5. Système (1) selon l'une quelconque des revendications précédentes,
**caractérisé en ce que**
le système (1) est construit à partir de deux composants (16, 17), une partie inférieure en forme de cuvette (16) formant le premier composant et une partie supérieure en forme de couvercle (17) formant le deuxième composant.

6. Système (1) selon la revendication 1,
**caractérisé en ce que**
la connexion (21) desdits au moins deux composants (16, 17', 17") est prévue dans des régions du système (1) qui ne sont sollicitées de manière permanente ni par le réfrigérant (10) ni par l'huile hydraulique (11).

7. Système (1) selon l'une quelconque des revendications précédentes,
**caractérisé en ce que**
le système (1) est construit essentiellement en plastique.

8. Système (1) selon la revendication 7,
**caractérisé en ce que**
le plastique est du polypropylène.

9. Système (1) selon l'une quelconque des revendications précédentes,
**caractérisé en ce que**
ladite au moins une paroi de limitation commune (20) présente des éléments (22) qui sont fabriqués en un matériau qui présente une capacité thermique spécifique supérieure à celle du matériau de la paroi de limitation.

10. Système (1) selon la revendication 9,
**caractérisé en ce que**
les éléments (22) s'étendent depuis la surface extérieure de la paroi de limitation (20) tournée vers le réservoir de réfrigérant (2) jusqu'à la surface extérieure de la paroi de limitation (20) tournée vers le réservoir d'huile hydraulique (3).

11. Système (1) selon l'une quelconque des revendications précédentes,
**caractérisé en ce que**
le réservoir d'huile hydraulique (3) présente une forme de base tubulaire et est entouré par le réservoir de réfrigérant (2) de telle sorte que la surface d'enveloppe du réservoir d'huile hydraulique (3) forme ladite au moins une paroi de limitation commune (20).

12. Système (1) selon l'une quelconque des revendications précédentes,
**caractérisé en ce que**
le réservoir de réfrigérant (2) et/ou le réservoir d'huile hydraulique (3) présente(nt) une ouverture de remplissage (8, 9) à l'extrémité supérieure.

13. Système (1) selon l'une quelconque des revendications précédentes,
**caractérisé en ce que**
le réservoir de réfrigérant (2) et/ou le réservoir d'huile hydraulique (3) est/sont configuré(s) à l'intérieur avec un dispositif de conduction qui conduit un écoulement de fluide guidé à travers le réservoir (2, 3).

14. Système (1) selon l'une quelconque des revendications précédentes,
**caractérisé en ce**
**qu'**une plaque d'impact est prévue dans le réservoir de réfrigérant (2) et/ou dans le réservoir d'huile hydraulique (3), afin de calmer un écoulement de fluide entrant.

15. Système (1) selon l'une quelconque des revendications précédentes,
**caractérisé en ce**
**qu'**un filtre (18) est prévu dans le réservoir de réfrigérant (2) et/ou dans le réservoir d'huile hydraulique (3), afin de purifier un écoulement de fluide conduit à travers le réservoir (2, 3).

16. Système monolithique (1) selon la revendication 1,
**caractérisé en ce que**
le système (1) est réalisé d'une seule pièce sous forme de composant coulé.

17. Système monolithique (1) selon la revendication 1,
**caractérisé en ce que**
le système (1) est réalisé d'une seule pièce sous forme de composant moulé à chaud.

18. Procédé pour influencer la température d'une huile hydraulique (11) d'une direction assistée hydraulique,
**caractérisé en ce**
**qu'**un réservoir d'huile hydraulique (3) stockant l'huile hydraulique (11) est réalisé de telle sorte que le réservoir d'huile hydraulique (3) avec un réservoir de réfrigérant (2) d'un refroidissement par circulation de liquide d'un moteur à combustion interne présente au moins une paroi de limitation commune (20) de telle sorte que du réfrigérant (10) se trouve d'un côté de la paroi de limitation (20) et que de l'huile hydraulique (11) se trouve de l'autre côté de la paroi de limitation (20).

19. Procédé pour influencer la température d'une huile hydraulique (11) selon la revendication 18,
**caractérisé en ce que**
pendant le fonctionnement du moteur à combustion interne, l'huile hydraulique (11) est refroidie au moyen du liquide de refroidissement (10) se trouvant dans le réservoir de réfrigérant (2).

20. Procédé pour influencer la température d'une huile hydraulique (11) selon la revendication 18 ou 19,
**caractérisé en ce que**
dans la phase de fonctionnement à chaud du moteur à combustion interne, l'huile hydraulique (11) est réchauffée au moyen du liquide de refroidissement (10) se trouvant dans le réservoir de réfrigérant (2).
